# EUROPÄISCHE PATENTSCHRIFT

(11) **EP 3 511 270 B1**
(45) Veröffentlichungstag und Bekanntmachung des Hinweises auf die Patenterteilung: **07.12.2022**
(21) Anmeldenummer: 19150967.8
(22) Anmeldetag: 09.01.2019
(51) Int. Cl.: B65G 33/26

(54) **STEIGSCHNECKE**
ELEVATING SCREW
VIS DE RELEVAGE

(30) Priorität: 10.01.2018 AT 500072018
(43) Veröffentlichungstag der Anmeldung: 17.07.2019
(73) Patentinhaber: Hargassner Ges mbH, 4952 Weng/Innkreis (AT)
(72) Erfinder: HARGASSNER, Markus, 4952 Weng (AT)
(74) Vertreter: Hübscher & Partner Patentanwälte GmbH

(56) Entgegenhaltungen:
- DE-B- 1 086 625
- GB-A- 913 163
- US-A- 1 023 888
- US-A- 1 775 888
- US-A- 3 485 116
- US-A- 4 399 906
- US-A- 4 860 554

## Beschreibung

Die Erfindung bezieht sich auf einen Vertikalschneckenförderer, mit einer Steigschnecke zur Förderung von Hack- und Stückgut mit einem um einen Schneckenkern spiralförmig umlaufenden Schneckenblatt.

Auf dem Gebiet von einen Niveauunterschied überwindenden Stückgutförderern sind Vertikalschneckenförderer bekannt (DE 1086625 B), die ein Gehäuse mit um die Längsachse des Förderers rotierende Schnecken zur Förderung von Stückgütern aufweisen. GB913163A beschreibt einen Vertikalschneckenförderer nach dem Oberbegriff des Anspruchs 1.

Werden derartige Schnecken in einem diskontinuierlichen Förderprozess eingesetzt, wie dies beispielsweise bei der Beschickung von Feuerungen für Heizungsanlagen mit stückeligem Brennstoff regelmäßig der Fall ist, wobei die Brennstoffmenge bei konstanter Schneckendrehzahl über einen getakteten Betrieb gesteuert wird, ergibt sich das Problem, dass bei einer Unterbrechung des Förderbetriebes das Hack-oder Stückgut im Schneckenförderer zufolge der Schwerkraft zurückgleitet, sodass bei einem neuerlichen Start des Förderbetriebes Vorlaufzeiten eingerechnet werden müssen, bis das Fördergut wieder am Ausgang des Schneckenförderers zur Verfügung steht.

Der Erfindung liegt somit die Aufgabe zugrunde, eine Steigschnecke der eingangs geschilderten Art so auszugestalten, dass bei einem diskontinuierlichen Förderprozess mit variierender Taktung ein konstanter Materialfluss ermöglicht wird.

Die Erfindung löst die gestellte Aufgabe mit einem Vertikalschneckenförderer nach Anspruch 1 sowie mit einem Verfahren nach Anspruch 4.

Der Erfindung liegt die Beobachtung zugrunde, dass der Großteil des Eigengewichtes des zu fördernden Hack-oder Stückgutes über das spiralförmig umlaufende Schneckenblatt aufgenommen wird und die entlang des umlaufenden Schneckenblattes wirkende, für ein Zurückgleiten des Fördergutes maßgebliche Kraftkomponente verhältnismäßig gering ist. Zufolge der erfindungsgemäßen Maßnahmen kann durch eine Rückhaltestufe, die gegen die Förderrichtung hin ansteigt, ein Anschlag für das Fördergut gebildet werden, der diese Kraftkomponente ausgleicht. Je nach Dimensionierung der Schnecke und dem zu fördernden Hack-oder Stückgut kann dabei die Rückhaltestufe eine deutlich geringere Höhe als das auf dem Schneckenblatt aufliegende Fördergut aufweisen, weil zufolge der geringen, entlang der Förderflanke wirkenden Kraftkomponente, die innerhalb des Fördergutstromes wirkenden Reibungskräfte ausreichen, um den Fördergutstrom insgesamt zu bremsen und an einem Zurückgleiten zu hindern. Dadurch, dass die Rückhaltestufe in Förderrichtung abfällt, behindert sie den Förderguttransport beim Betrieb des Schneckenförderers nicht, sondern es kommt beim Überwinden der Rückhaltestufe lediglich zu einem kurzfristigen Steighöhenverlust für das Fördergut. Zufolge der entfallenden Vorlaufzeiten für eine kontinuierliche Förderung ergeben sich nicht nur Energieeinsparungen, sondern es kann auch die zufolge des Förderantriebes entstehende Lärmentwicklung reduziert werden. Dies ist insbesondere im Zusammenhang mit Beschickungsvorgängen von Feuerungen für häusliche Heizungsanlagen vorteilhaft. Die erfindungsgemäßen Maßnahmen ermöglichen besonders günstige Betriebsbedingungen bei einer vertikalen Förderung des Hack-oder Stückguts, jedoch kann die erfindungsgemäße Steigschnecke auch bei unterschiedlichen Steigwinkeln des Schneckenförderers vorteilhaft eingesetzt werden.

In Hinblick auf die Rückhaltewirkung und die bei der Förderung auftretenden Steighöhenverluste stellen sich vorteilhafte Bedingungen ein, wenn die Rückhaltestufe eine der Dicke des Schneckenblattes entsprechende Höhe aufweist. Wie bereits oben ausgeführt, reicht eine derartig geringe Höhe der Rückhaltestufe aus, um ein Zurückgleiten des Fördergutstromes wirksam zu verhindern.

Um nicht nur eine geringe Leistungsaufnahme, sondern auch eine konstruktiv einfache Fertigung einer erfindungsgemäßen Steigschnecke zu ermöglichen wird vorgeschlagen, dass das Schneckenblatt wenigstens zwei Blattsegmente aufweist, die zueinander je in Längsrichtung der Steigschnecke unter Ausbildung der Rückhaltestufe versetzt angeordnet sind. Demzufolge bleibt die Steighöhe des Schneckenblattes über die Förderhöhe konstant und wird lediglich beim Übergang zwischen zwei Blattsegmenten durch die sich ausbildenden Rückhaltestufen unterbrochen. Im Vergleich zu einer Steigschnecke ohne die erfindungsgemäßen Rückhaltestufen kann die Drehzahl daher gleichbleiben.

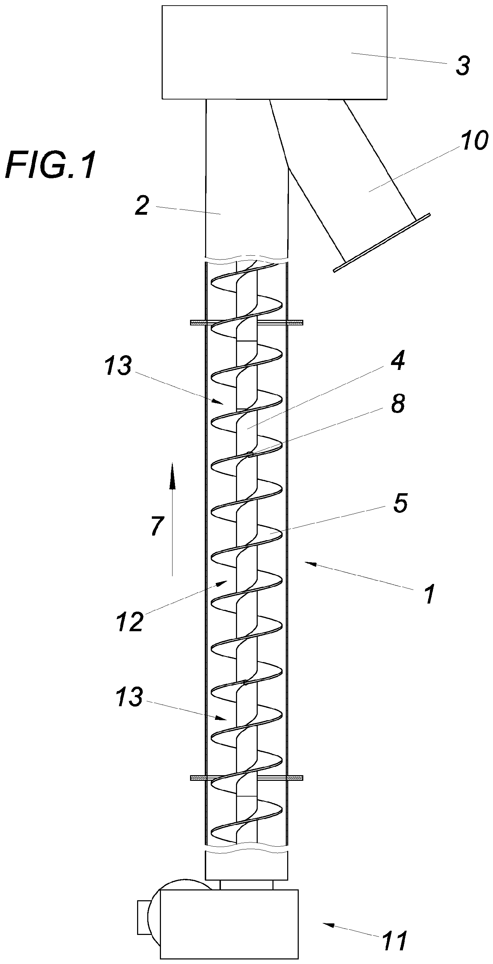

In der Zeichnung ist der Erfindungsgegenstand beispielsweise dargestellt. Es zeigen
- Fig. 1: eine teilweise aufgerissene Seitenansicht eines Vertikalschneckenförderers mit einer Steigschnecke und
- Fig. 2: eine perspektivische Detailansicht der Steigschnecke in einem größeren Maßstab.

Eine Steigschnecke 1 ist innerhalb eines Vertikalschneckenförderers 2 angeordnet und wird von einem schematisch dargestellten Antrieb 3 angetrieben. Dabei weist die Steigschnecke 1 einen Schneckenkern 4 mit einem um diesen spiralförmig umlaufenden Schneckenblatt 5 auf. Das Schneckenblatt 5 bildet in Förderrichtung 7 eine Förderflanke 6 aus, die eine in Förderrichtung 7 abfallende Rückhaltestufe 8 aufweist.

Im Förderbetrieb rotiert die Steigschnecke 1 um ihre Längsachse, sodass Hack-oder Stückgut 9, wie beispielsweise Hackschnitzel, Holzpellets oder Miscanthus, in vertikaler Förderrichtung 7 entlang des Schneckenblattes 5 zu einem Auswerfer 10 gefördert wird. Besonders günstige Konstruktionsverhältnisse ergeben sich dann, wenn der Antrieb 3 nicht in Bodennähe, sondern auf der Auswerferseite 10 des Schneckenförderers 2 angeordnet ist, sodass ein horizontaler Zubringungsschneckenförderer 11 möglichst in Bodennähe platziert werden kann.

Bei einer Unterbrechung des Förderbetriebes, das heißt bei Anhalten des Antriebes 3, würde das Hack-oder Stückgut 9 schwerkraftbedingt entlang des Schneckenblattes 5 entgegen der Förderrichtung 7 zurückgleiten, wenn nicht die Rückhaltestufe 8 einen Anschlag für das Hack-oder Stückgut 9 bilden würde. Da das Schneckenblatt 5 bereits einen Großteil der entgegen der Förderrichtung 7 verlaufenden Gewichtskraftkomponenten 7 des Hack-oder Stückgut 9 aufnimmt, verbleibt nur eine geringe entlang des Schneckenblattes 5 wirkende Kraftkomponente, sodass eine Rückhaltestufe 8, deren Höhe in etwa der Dicke des Schneckenblattes 5 entspricht ausreicht, um ein Zurückgleiten des Fördergutstromes 9 insgesamt zu verhindern, weil die inneren Reibungskräfte des Fördergutstromes 9 bereits eine zusätzliche Bremswirkung hervorrufen.

Um in diesem Zusammenhang eine einfache Fertigung einer Steigschnecke 1 zu ermöglichen, weist das Schneckenblatt 5 gemäß der Erfindung wenigstens zwei Blattsegmente 12, 13 auf, die zueinander je in Längsrichtung der Steigschnecke 1 unter Ausbildung der Rückhaltestufe 8 versetzt angeordnet sind. Dabei wird die versetzte Anordnung so verstanden, dass das in Förderrichtung 7 vorangehende Blattsegment 12 gegenüber dem in Förderrichtung 7 nachfolgenden Blattsegment 13 entgegen der Förderrichtung 7 zurückversetzt ist, sodass die sich dadurch einstellende Beabstandung der Blattsegmente 12, 13 zueinander die Rückhaltestufe 8 ausbildet.

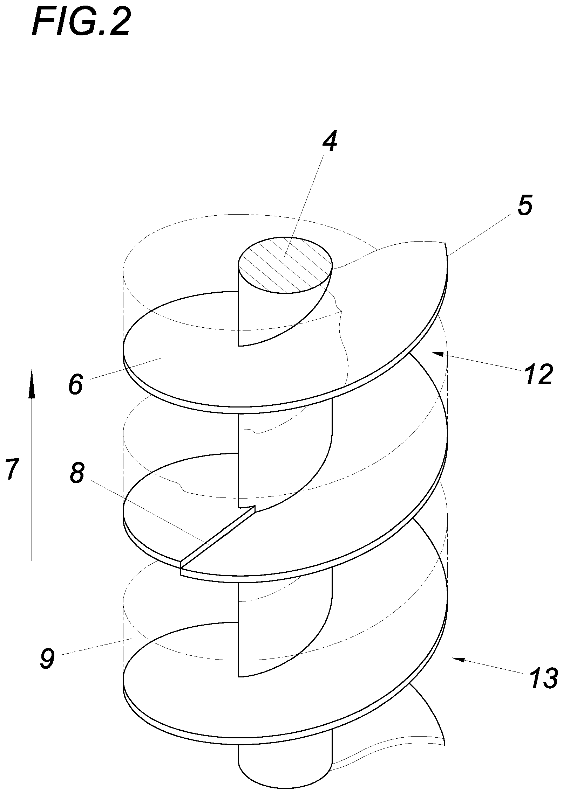

Werden, wie insbesondere Fig. 2 entnommen werden kann, mehrere Blattsegmente 12, 13 zueinander versetzt angeordnet, so kann die Rückhaltestufe 8 ohne eine Änderung der Steigung des Schneckenblattes 5 vorgesehen werden, sodass sich hinsichtlich des Antriebes 3 gleichbleibende Leistungsverhältnisse ergeben.

Dadurch, dass zufolge obiger Ausführungen bei einer Steigschnecke 1 ein Zurückgleiten des zu befördernden Hack-oder Stückgut 9 verhindert werden kann und hierfür auch keine Änderungen des Antriebes 3 daher erforderlich werden, muss dieser in einer typischen Fördersituation, wie sie beispielsweise bei häuslichen Heizungsanlagen anzutreffen ist, deutlich weniger lange in Betrieb gesetzt werden, weil eine Anlaufphase, innerhalb der das Hack-oder Stückgut 9 von der Basis des Vertikalschneckenförderers 2 bis zum Auswerfer 10 gefördert werden muss, entfallen kann.

## Patentansprüche

1. Vertikalschneckenförderer mit einer Steigschnecke (1) mit einem um einen Schneckenkern (4) spiralförmig umlaufenden Schneckenblatt (5), dessen Förderflanke (6) wenigstens eine in Förderrichtung (7) abfallende Rückhaltestufe (8) aufweist, **dadurch gekennzeichnet, dass** das Schneckenblatt (5) wenigstens zwei Blattsegmente (12, 13) aufweist, die zueinander je in Längsrichtung der Steigschnecke (1) unter Ausbildung der Rückhaltestufe (8) versetzt angeordnet sind, wobei das in Förderrichtung (7) vorangehende Blattsegment (12) gegenüber dem in Förderrichtung (7) nachfolgenden Blattsegment (13) entgegen der Förderrichtung (7) zurückversetzt ist, **dadurch gekennzeichnet, dass** die sich durch die Zurückversetzung einstellende Beabstandung der Blattsegmente (12, 13) zueinander die Rückhaltestufe (8) ausbildet.

2. Vertikalschneckenförderer (2) nach Anspruch 1, **dadurch gekennzeichnet, dass** die Rückhaltestufe (8) eine der Dicke des Schneckenblattes (5) entsprechende Höhe aufweist.

3. Vertikalschneckenförderer (2) nach Anspruch 1 oder 2, **dadurch gekennzeichnet, dass** ein Antrieb (3) auf der Auswerferseite (10) des Vertikalschneckenförderers (2) angeordnet ist.

4. Verfahren zur Beschickung von Feuerungen für Heizungsanlagen mit stückeligem Brennstoff, wobei die Brennstoffmenge bei konstanter Schneckendrehzahl über einen getakteten Betrieb gesteuert und Hack- oder Stückgut (9), wie beispielsweise Hackschnitzel, Holzpellets oder Miscanthus, mit einem Vertikalschneckenförderer (2) nach einem der vorhergehenden Ansprüche in vertikaler Förderrichtung (7) entlang eines Schneckenblattes (5) zu einem Auswerfer (10) gefördert wird.

## Claims

1. Vertical screw conveyor comprising an elevating screw (1) with a screw blade (5) which rotates spirally about a screw core (4) and of which the conveying flank (6) has at least one retaining step (8) which slopes in the conveying direction (7), **characterised in that** the screw blade (5) has at least two blade segments (12, 13) which are each arranged in an offset manner with respect to one another in the longitudinal direction of the elevating screw (1), thus forming the retaining step (8), wherein the blade segment (12) leading in the conveying direction (7) is set back in the opposite direction to the conveying direction (7) with respect to the blade segment (13) following in the conveying direction (7), **characterised in that** the spaced interval of the blade segments (12, 13) with respect to one another resulting from the setting-back forms the retaining step (8).

2. Vertical screw conveyor (2) as claimed in claim 1, **characterised in that** the retaining step (8) has a height corresponding to the thickness of the screw blade (5).

3. Vertical screw conveyor (2) as claimed in claim 1 or 2, **characterised in that** a drive (3) is arranged on the ejector side (10) of the vertical screw conveyor (2).

4. Method for feeding furnaces for heating systems with lumpy fuel, wherein the fuel quantity is controlled at a constant screw rotational speed via a clocked operation and chopped or lumpy material (9), such as wood chips, wood pellets or *Miscanthus* is conveyed by a vertical screw conveyor (2) as claimed in any one of the preceding claims in a vertical conveying direction (7) along a screw blade (5) to an ejector (10).

## Revendications

1. Convoyeur à vis vertical comprenant une vis de relevage (1) présentant une lame de vis sans fin périphérique de forme hélicoïdale (4) qui entoure un noyau de vis sans fin (5), dans lequel le côté de transport (6) comporte au moins un gradin de retenue descendant (8) dans la direction de transport (7), **caractérisé en ce que** la lame de vis sans fin (5) comprend au moins deux segments de lame (12, 13) qui sont disposés d'une façon décalée l'un par rapport à l'autre dans la direction longitudinale de la vis de relevage (1) de manière à former ainsi le gradin de retenue (8), le segment de lame (12) précédent dans la direction de transport (7) étant décalé vers l'arrière par rapport au segment de lame (13) suivant dans la direction de transport (7), dans le sens opposé à la direction de transport (7), **caractérisé en ce que** l'écartement des segments de lame (12, 13) l'un par rapport à l'autre, qui est établi par le décalage vers l'arrière, constitue le gradin de retenue (8).

2. Convoyeur à vis vertical (2) selon la revendication 1, **caractérisé en ce que** le gradin de retenue (8) présente une hauteur qui correspond à l'épaisseur de la lame de vis sans fin (5).

3. Convoyeur à vis vertical (2) selon la revendication 1 ou 2, **caractérisé en ce qu'**un entraînement (3) est disposé sur le côté éjecteur (10) du convoyeur à vis vertical (2).

4. Procédé d'alimentation de foyers pour des installations de chauffage avec du combustible en morceaux, dans lequel la quantité de combustible est commandée à vitesse de rotation de vis constante par un fonctionnement cadencé, et dans lequel le produit haché ou en morceaux (9), tel que par exemple des copeaux de bois, des pellets de bois ou du miscanthus, est transporté par l'intermédiaire d'un convoyeur à vis vertical (2) selon l'une quelconque des revendications précédentes dans la direction de transport verticale (7) le long d'une lame de vis sans fin (5) jusqu'à un éjecteur (10).
